# EUROPÄISCHE PATENTANMELDUNG

(11) **EP 2 782 323 A1**
(43) Veröffentlichungstag der Anmeldung: **24.09.2014**
(21) Anmeldenummer: 13160368.0
(22) Anmeldetag: 21.03.2013
(51) Int. Cl.: H04M 1/725, G06F 3/0481

(54) **Verfahren zur Unterstützung der Bedienung und Verwaltung von einer Mehrzahl von Softwarebausteinen**

(71) Anmelder: Siemens Aktiengesellschaft, 80333 München (DE)
(72) Erfinder: Struck, Günter, 45136 Essen (DE)

(57) **Zusammenfassung**

Die Erfindung betrifft ein Verfahren zur Unterstützung der Bedienung und Verwaltung von einer Mehrzahl von Softwarebausteinen (APP1,...,APPn), welche auf einem mobilen Endgerät (1) installiert sind, und das mobile Endgerät (1) von einem Benutzer (3) mit sich geführt wird, wobei Piktogramme (P1,...,Pn), welche die Softwarebausteine (APP1,..,APPn) repräsentieren, in einer Softwarebausteinübersicht (4) auf einem Display (5) des mobilen Endgerätes (1) dargestellt werden, wobei auf die Piktogramme (P1,...,Pn) der Softwarebausteine (APP1,..,APPn) mit einer Bedien-/Beobachtungsfunktionalität für stationäre Endgeräte (21,...,2n) ein Selektionskriterium angewendet wird um die Piktogramme (P1,...,Pn) der Softwarebausteine (APP1,..,APPn) mit der Bedien-/Beobachtungsfunktionalität in Abhängigkeit eines Abstandes (a) des mobilen Endgerätes (1) zu dem stationären Endgerät (21,...,2n) nach einer Rangfolge zu organisieren, wobei die Bewertung eines Piktogramms (P1,...,Pn) für die Rangfolge aus dem Abstand (a) des dem Piktogramm (P1,...,Pn) durch den Softwarebaustein (APP1 , ..., APPn) mit der Bedien-/Beobachtungsfunktionalität zugeordnetem zu bedienenden und oder beobachtenden stationären Endgerät (21,...,2n) zu den mobilen Endgerät (1) durch geführt wird.

## Beschreibung

Die Erfindung betrifft ein Verfahren zur Unterstützung der Bedienung und Verwaltung von einer Mehrzahl von Softwarebausteinen, welche auf einem mobilen Endgerät installiert sind, und das mobile Endgerät von einem Benutzer mit sich geführt wird, wobei Piktogramme, welche die Softwarebausteine repräsentieren, in einer Softwarebausteinübersicht auf einem Display des mobilen Endgerätes dargestellt werden.

Die Erfindung betrifft weiterhin ein Computerprogrammprodukt umfassend Programmteile und Instruktionen zur Durchführung des erfindungsgemäßen Verfahrens.

Unter mobilem Endgerät im Sinne der Erfindung ist auch ein HMI-Gerät (Human Machine Interface) aus einer der Klassen der Smartphones, Navigationsgeräte oder Tablet-PCs zu verstehen, wobei das HMI-Gerät sich über eine drahtlose Kommunikationsverbindung mit stationären Endgeräten verbinden kann.

Ein mobiles Endgerät (z.B. Smartphone) kann sich demnach kommunikationstechnisch kabellos mit einem stationären Endgerät verbinden und "HMI" (Human Machine Interface) Funktionalitäten können als ein Softwarebaustein auf dem mobilen Endgerät ablaufen. Bekannt sind diese Softwarebausteine als Applikationen, welche heutzutage kurz "App" genannt werden.

Es ist damit zu rechnen, dass in Zukunft verschiedenste Geräte im Haushalt, Auto, Büro, öffentliche Gebäude und auch Maschinen und Anlagen der Industrie direkt von einem mobilen Endgerät, beispielsweise Smartphone mit HMI-Funktionalität, bedient werden können.

Bei einer Vielzahl von Applikationen (Apps) auf den Endgeräten ist es von Nachteil, dass das Auffinden einer gerade benötigten App sehr aufwändig ist und gegebenenfalls nicht mehr praktikabel ist.

Es ist Aufgabe der vorliegenden Erfindung, die Bedienung und Verwaltung von einer Mehrzahl von Softwarebausteinen (Apps) auf einen mobilen Endgerät zu erleichtern.

Die Aufgabe wird für das eingangs genannte Verfahren dadurch gelöst, dass auf die Piktogramme der Softwarebausteine mit einer Bedien-/Beobachtungsfunktionalität für stationäre Endgeräte ein Selektionskriterium angewendet wird um die Piktogramme der Softwarebausteine mit der Bedien-/Beobachtungsfunktionalität in Abhängigkeit eines Abstandes des mobilen Endgerätes zu dem stationären Endgerät nach einer Rangfolge zu organisieren, wobei die Bewertung eines Piktogrammes für die Rangfolge aus dem Abstand des dem Piktogramm durch den Softwarebaustein mit der Bedien-/Beobachtungsfunktionalität zugeordnetem zu bedienenden und/oder beobachtenden stationären Endgerät zu den mobilen Endgerät durchgeführt wird. Mit Vorteil kann nun ein mobiles Endgerät derart betrieben werden, dass wenn das Endgerät über eine drahtlose Kommunikationseinrichtung, vorzugsweise über WLAN oder Bluetooth, eine Verbindung mit einem stationären Endgerät aufgenommen hat, dass die zugehörige Applikation bzw. der zugehörige Softwarebaustein, über das zugehörige Piktogramm auf einer Bedienoberfläche des mobilen Endgerätes bevorzugt vor allen anderen Piktogrammen für Softwarebausteine angezeigt wird.

Vorteilhafter Weise wird als ein erstes Selektionskriterium eine Abstandssituation verwendet, bei welcher das mobile Endgerät erstmalig einen drahtlosen Verbindungsaufbau zu dem stationären Endgerät herstellen konnte. Demnach wird eine einfache Form der Abstandsmessung durchgeführt, wobei es nur darum geht, ist das mobile Endgerät mit einem stationären Endgerät verbunden oder ist es nicht verbunden. Je nach Status "verbunden" oder "nicht verbunden" würde es dem Benutzer über das Piktogramm in der Bedienoberfläche des mobilen Endgerätes angezeigt werden. Denn wird eine drahtlose Verbindung zwischen den Geräten hergestellt, so lässt sich daraus schon eine grobe Aussage zu den Abständen machen. Bei einer Verbindung über WLAN oder Bluetooth lässt sich aussagen, dass beide Geräte innerhalb z.B. von einem Radius von 500 m zu finden sind. Es lässt sich dann bezüglich der stationären Endgeräte und den zugehörigen Softwarebausteinen bzw. Apps unterscheiden zwischen denen innerhalb dieses Abstandes und denen außerhalb dieses Abstandes. Damit ist eine erste einfache Möglichkeit geschaffen die Apps zu organisieren, zu sortieren bzw. zu favorisieren.

In einer weiteren vorteilhaften Ausgestaltung des Verfahrens wird aufbauend auf das erste Selektionskriterium die Abstandssituation auf eine Signalintensität der drahtlosen Verbindung untersucht und die Signalintensität als zweites Selektionskriterium verwendet. Die Intensität der Empfangssignale von beispielsweise Bluetooth oder WLAN kann gemessen werden und anhand der Intensität kann eine Reihenfolge der Piktogramme für die zu bedienenden stationären Endgeräte festgelegt werden. Damit ist eine verfeinerte Möglichkeit geschaffen die Apps zu sortieren.

Weiterhin ist es möglich als ein drittes Selektionskriterium ein Vergleich eines ersten Datensatzes von Standortkoordinaten des mobilen Endgerätes mit einen zweiten Datensatz von Standortkoordinaten des stationären Endgerätes zu verwenden. Dazu sind die stationären Endgeräte in einem Datenspeicher mit ihren geodätischen Positionen ausgestattet. Das mobile Endgerät fragt diese stationäre geodätische Position ab und vergleicht es mit seiner eigenen geodätischen Position, welche es anhand von integrierten GPS-Empfängern ermitteln kann.

Als ein viertes Selektionskriterium wird eine Ausrichtung des Benutzers mit seinem mobilen Endgerät zu dem stationären Endgerät verwendet, wobei die Ausrichtung anhand eines im mobilen Gerät integrierten elektronischen Kompasses ermittelt wird. Damit ist eine weitere verfeinerte Möglichkeit einer Sortierung der Apps geschaffen. Beispielsweise steht der Benutzer in der Mitte von ihm umgebenen drei stationären Endgeräten, durch eine Drehung des Benutzers um seine eigene Achse verändert er die Ausrichtung des mobilen Gerätes zu den stationären Geräten unter Zuhilfenahme der geodätischen Daten kann mit der Kompassfunktionalität eine Aussage darüber getroffen werden auf welches stationäre Gerät seine Blickrichtung gerichtet ist. Die App bzw. das Piktogramm des Softwarebausteins für dieses stationäre Gerät bekommt dann den höchsten Rang in der Rangfolge.

Bei einer komfortablen Lösung des Verfahrens wird das Piktogramm des Softwarebausteins mit einer Bedien-/Beobachtungsfunktionalität, welches das Ranghöchste ist, den zugehörigen Softwarebaustein automatisch starten.

Ein zugehöriges Computerprogrammprodukt umfassen Programmteile und Instruktionen, welche, wenn geladen, in einem mobilen Endgerät, zur Durchführung des Verfahrens nach einem der Ansprüche 1 bis 6 ausgelegt sind, ist ebenfalls als eine Art Organisations-App im mobilen Endgerät mit Vorteil zu laden und zu benutzen.

Die Zeichnung zeigt ein Ausführungsbeispiel der Erfindung. Es zeigen
- FIG 1: ein mobiles Endgerät mit unterschiedlichen Abständen zu stationären Endgeräten,
- FIG 2: ein mobiles Endgerät mit einem Intensitätsmessmittel,
- FIG 3: ein mobiles Endgerät mit einem elektronischen Kompass und
- FIG 4: einen Programmablaufplan.

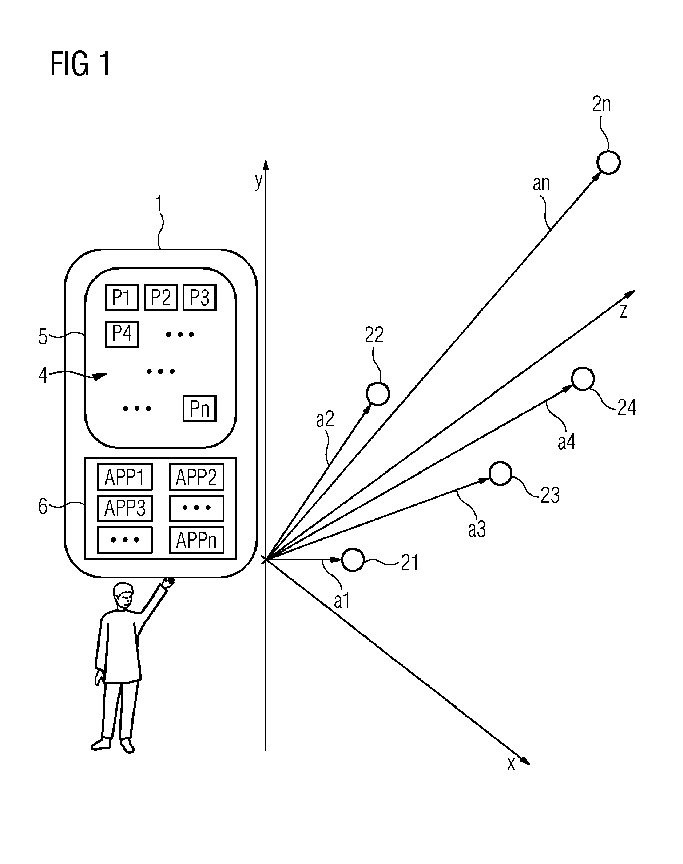

Gemäß FIG 1 ist ein mobiles Endgerät 1 mit einem Display 5 dargestellt. Auf dem Display 5 werden als Piktogramme ein erstes Piktogramm P1, ein zweites Piktogramm P2, ein drittes Piktogramm P3, ein viertes Piktogramm P4 bis zu einem n'ten Piktogramm Pn in einer Reihenfolge dargestellt. Diese Darstellung der Piktogramme P1,...,Pn erfolgt in einer Softwarebausteinübersicht 4. Dem mobilen Endgerät 1 ist ein Speicher 6 zugeordnet, in dem die Softwarebausteine nämlich ein erster Softwarebaustein APP1, ein zweiter Softwarebaustein APP2, ein dritter Softwarebaustein APP 3, ein vierter Softwarebaustein APP4 bis zu einem n'ten Softwarebaustein APPn abgespeichert sind. Die Piktogramme P1,...,Pn sind den Softwarebausteinen APP1,...,APPn zugeordnet. Um ein stationäres Gerät mit dem mobilen Endgerät 1 zu bedienen, sind die Softwarebausteine APP1,...,APPn mit einer Bedien-/Beobachtungsfunktionalität für die stationären Endgeräte ausgestattet.

Um einen Benutzer 3 des mobilen Endgerätes 1 eine Bedienung des mobilen Endgerätes 1 zu erleichtern, wird ein Verfahren zur Unterstützung der Bedienung und Verwaltung der Softwarebausteine APP1,...,APPn mit Hilfe der zugeordneten Piktogramme P1,...,Pn in dem mobilen Endgerät 1 bereitgestellt. Hierzu wird auf die Piktogramme P1,...,Pn der Softwarebausteine APP1,...,APPn ein Selektionskriterium angewendet um die Piktogramme P1,...,Pn der Softwarebausteine APP1,...,APPn mit der Bedien-/Beobachtungsfunktionalität für die unterschiedlichen stationären Endgeräte 21,...,2n in Abhängigkeit eines Abstandes a,..., an des mobilen Endgerätes 1 zu den jeweiligen stationären Endgeräten 21,...,2n nach einer Rangfolge zu organisieren. Die Bewertung eines Piktogrammes P1,...,Pn für die Rangfolge wird aus dem Abstand a1,...,an des dem Piktogramm P1,...,Pn durch den Softwarebaustein APP1,...,APPn mit der Bedien-/Beobachtungsfunktionalität zugeordnetem zu bedienenden und/oder beobachtenden stationären Endgerät 21,...,2n zu dem mobilen Endgerät 1 durchgeführt.

In einer Reihenfolge von einem kleinsten Abstand zu einem größten Abstand hat das mobile Endgerät 1 zu einen ersten stationären Endgerät 21 einen ersten Abstand a1, zu einem zweiten stationären Endgerät 22 einen zweiten Abstand a2, zu einem dritten stationären Endgerät 23 einen dritten Abstand a3, zu einem vierten stationären Endgerät 24 einen vierten Abstand a4 und zu einem n-ten stationären Endgerät 2n einen n-ten Abstand an.

Gemäß dieser Abstandsreihenfolge von klein nach groß werden auf einer Bedienoberfläche in dem Display 5 die Piktogramme P1,...,Pn von links nach rechts und oben nach unten in der entsprechenden Reihenfolge angeordnet. Der Benutzer 3 des mobilen Endgerätes 1 weiß nun das sich das erste stationäre Endgerät 21, welches sich mit dem Softwarebaustein APP1, welchem das Piktogramm P1 zugeordnet ist, direkt in der Nähe befindet und mit dem Programm welches hinter den Softwarebaustein APP1 steht, bedienen lässt.

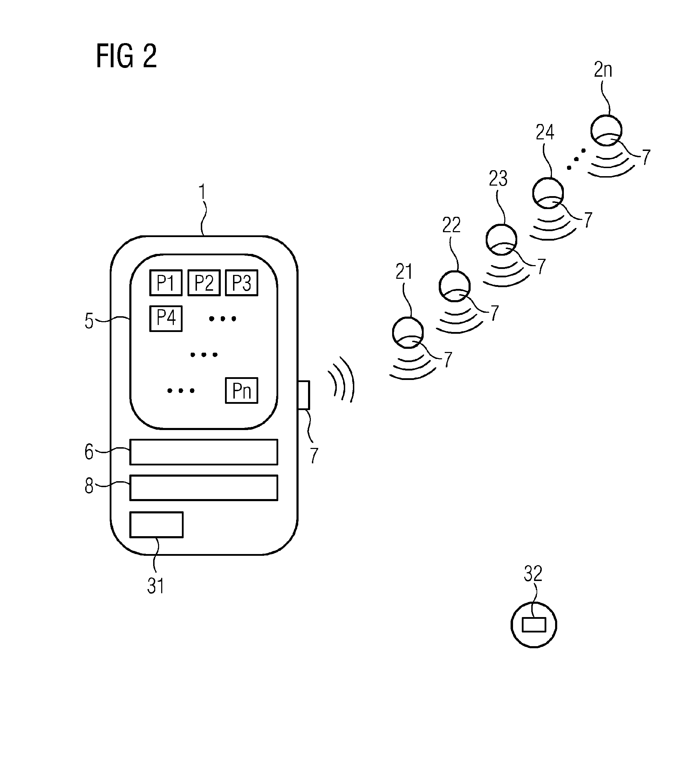

In der FIG 2 ist das aus FIG 1 bekannte mobile Endgerät 1 dargestellt, allerdings weist das mobile Endgerät 1 nun zusätzlich ein Intensitätsmessmittel 8 auf. Aufbauend auf ein erstes Selektionskriterium, bei welchem eine einfache Abstandssituation ausgewertet wurde, nämlich hat das mobile Endgerät 1 erstmalig einen drahtlosen Verbindungsaufbau zu den stationären Endgeräten 21,22,...,2n herstellen können, wird auf diese Abstandssituation eine Signalintensität der drahtlosen Verbindungen untersucht und die Signalintensität wird als zweites Selektionskriterium zur Erstellung der Rangfolge verwendet.

Über eine Funkschnittstelle 7 sendet das mobile Endgerät 1 Signale zu den stationären Endgeräten und empfängt auch wiederum Signale der stationären Endgeräte über die Funkschnittstelle 7. Mit diesen empfangenen Signalen kann das mobile Endgerät 1 über das Intensitätsmessmittel 8 die Intensität messen und dadurch auf Abstände des mobilen Endgerätes 1 zu den unterschiedlichen stationären Endgeräten 21,...,2n schließen.

Eine sehr genaue Möglichkeit der Abstandsmessung bietet sich, wenn das mobile Endgerät 1 einen ersten Datensatz 31 von Standortkoordinaten des mobilen Endgerätes 1 aufweist, wobei zumindest ein stationäres Endgerät einen zweiten Datensatz 32 von Standortkoordinaten des jeweiligen stationären Endgerätes aufweisen sollte. Durch einen Vergleich des ersten Datensatzes 31 der Standortkoordinaten des mobilen Endgerätes 1 mit dem zweiten Datensatz 32 der Standortkoordinaten des stationären Endgerätes kann der Abstand des mobilen Endgerätes 1 zu diesem stationären Endgerät annähernd genau festgestellt werden. Die nach dem Stand der Technik mobilen Endgeräte weisen heute durchweg einen GPS-Empfänger auf und können daher den ersten Datensatz 31 mit den Standortkoordinaten des mobilen Endgerätes 1 laufend aktualisieren.

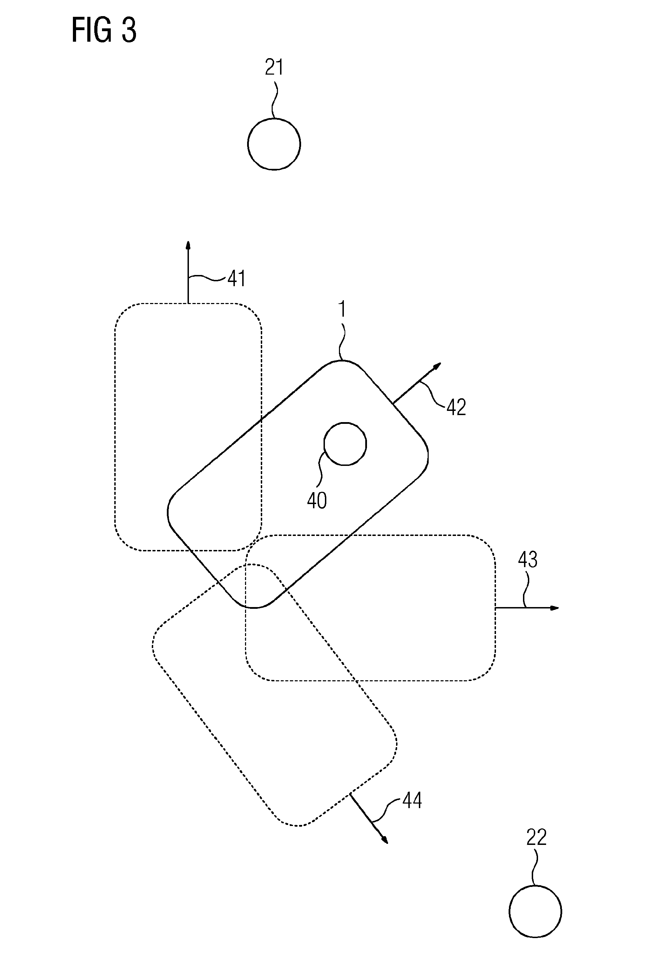

Gemäß FIG 3 ist eine weitere Möglichkeit für ein Selektionskriterium für eine Abstandsermittlung des mobilen Endgerätes 1 zu einem stationären Endgerät dargestellt. Eine Ausrichtung 41,42,43,44 des Benutzers 3 mit seinem mobilen Endgerät 1 zu dem stationären Endgerät 21,22 wird anhand eines im mobilen Endgerät 1 integrierten elektronischen Kompasses ermittelt. Diese Ausrichtung des mobilen Endgerätes 1 wird mit einer Intensitätsmessung verknüpft. Bei einer ersten Ausrichtung 41 hin zu dem ersten stationären Endgerät 21 ist die empfangene Intensität des ersten stationären Endgerätes 21 noch etwas größer als bei einer zweiten Ausrichtung 42. Und bei einer dritten Ausrichtung 43 des mobilen Endgerätes wird die Intensität des empfangenen Signales des ersten stationären Endgerätes 21 immer schwächer. Hingegen wird ab der dritten Ausrichtung 43 bis zu einer vierten Ausrichtung 44 die empfangene Signalintensität eines zweiten Endgerätes 22 immer stärker.

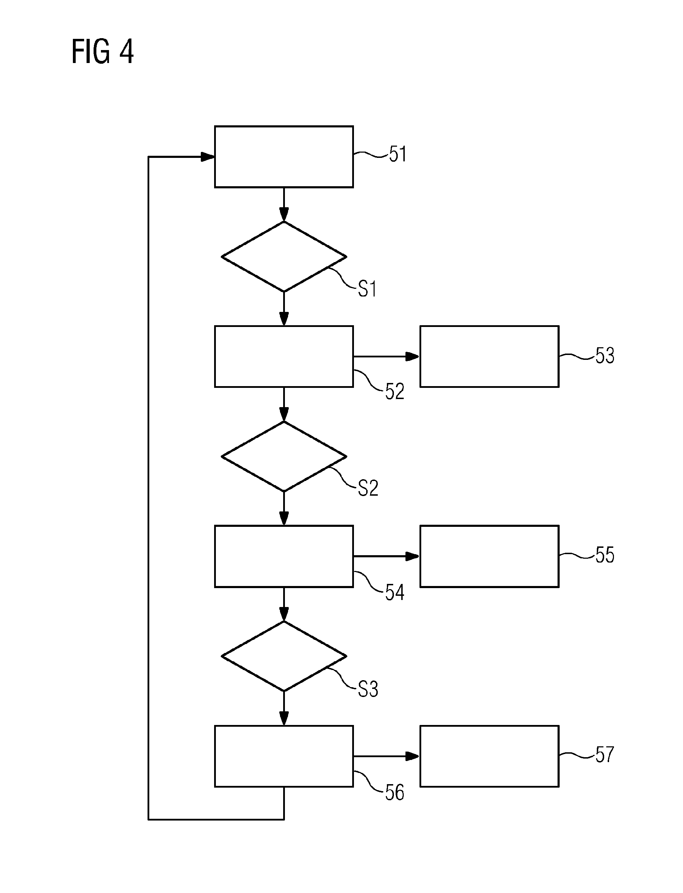

Gemäß FIG 4 ist ein prinzipieller Programmablauf für das Erstellen einer Rangfolge von Piktogrammen P1,...,Pn in einem mobilen Endgerät 1 abgebildet. Gestartet wird das Verfahren mit einem Suchschritt 51. In dem Suchschritt 51 werden alle über eine drahtlose Funkverbindung erreichbaren stationären Endgeräte 21,...,2n mittels ihrer Piktogramme P1,...,Pn aufgelistet. Diese erste Auflistung entspricht einem ersten Selektionskriterium S1, welches ein erstes Selektionsergebnis 52 bereitstellt. Auf diesem ersten Selektionsergebnis 52 kann eine erste Darstellung der Rangordnung 53 erfolgen. Diese Darstellung entspricht der einfachsten Darstellung von erreichbaren stationären Endgeräten 21,...,2n.

Gibt man das erste Selektionsergebnis 52 weiter an ein zweites Selektionskriterium S2, bei welchem auf eine Signalintensität der drahtlosen Verbindung geprüft wird, ergibt sich als Ergebnis ein zweites Selektionsergebnis 54. Auch dieses zweite Selektionsergebnis 54 kann als eine zweite Darstellung 55 der verfeinerten Rangordnung auf dem Display 5 des mobilen Endgerätes 1 angezeigt werden. Eine noch bessere Auswertung für eine Rangordnung wird dadurch erreicht, dass das zweite Selektionsergebnis 54 an ein drittes Selektionskriterium S3 weitergegeben wird, wobei durch das dritte Selektionskriterium S3 ein Vergleich eines ersten Datensatzes 31 von Standortkoordinaten des mobilen Endgerätes 1 mit einem zweiten Datensatz 32 von Standortkoordinaten des stationären Endgerätes 21,...,2n verwendet wird. Damit ergibt sich ein drittes Selektionsergebnis 56 welches wiederum eine verfeinerte Darstellung 57 der Rangordnung ergibt. Damit die Rangordnung der Piktogramme P1,...,Pn in dem Display 5 des mobilen Endgerätes 1 laufend aktualisiert wird, wird von dem dritten Selektionsergebnis 56 wieder an den Anfang verzweigt und mit dem Suchschritt 51 fortgefahren.

## Patentansprüche

1. Verfahren zur Unterstützung der Bedienung und Verwaltung von einer Mehrzahl von Softwarebausteinen (APP1,...,APPn), welche auf einem mobilen Endgerät (1) installiert sind, und das mobile Endgerät (1) von einem Benutzer (3) mit sich geführt wird, wobei Piktogramme (P1,...,Pn), welche die Softwarebausteine (APP1,..,APPn) repräsentieren, in einer Softwarebausteinübersicht (4) auf einem Display (5) des mobilen Endgerätes (1) dargestellt werden,
**dadurch gekennzeichnet, dass** auf die Piktogramme (P1,...,Pn) der Softwarebausteine (APP1,..,APPn) mit einer Bedien-/Beobachtungsfunktionalität für stationäre Endgeräte (21,...,2n) ein Selektionskriterium angewendet wird um die Piktogramme (P1,...,Pn) der Softwarebausteine (APP1,..,APPn) mit der Bedien-/Beobachtungsfunktionalität in Abhängigkeit eines Abstandes (a) des mobilen Endgerätes (1) zu dem stationären Endgerät (21,...,2n) nach einer Rangfolge zu organisieren,
wobei die Bewertung eines Piktogramms (P1,...,Pn) für die Rangfolge aus dem Abstand (a) des dem Piktogramm (P1,...,Pn) durch den Softwarebaustein (APP1,...,APPn) mit der Bedien-/Beobachtungsfunktionalität zugeordnetem zu bedienenden und oder beobachtenden stationären Endgerät (21,...,2n) zu den mobilen Endgerät (1) durch geführt wird.

2. Verfahren nach Anspruch 1, wobei als ein erstes Selektionskriterium (S1) eine Abstandssituation verwendet wird, bei welcher das mobile Endgerät (1) erstmalig einen drahtlosen Verbindungsaufbau zu dem stationären Endgerät (21,...,2n) herstellen konnte.

3. Verfahren nach Anspruch 2, das aufbauend auf das erste Selektionskriterium (S1) die Abstandssituation auf eine Signalintensität der drahtlosen Verbindung untersucht wird und die Signalintensität als zweites Selektionskriterium (S2) verwendet wird.

4. Verfahren nach Anspruch 3, wobei als ein drittes Selektionskriterium (S3) ein Vergleich eines ersten Datensatzes (31) von Standortkoordinaten des mobilen Endgerätes (1) mit einem zweiten Datensatz (32) von Standortkoordinaten des stationären Endgerätes (21,...,21n) verwendet wird.

5. Verfahren nach Anspruch 3 oder 4, wobei als ein viertes Selektionskriterium (S4) eine Ausrichtung (41,42,43) des Benutzers mit seinem mobilen Endgerät (1) zu dem stationären Endgerät (21,...,2n) verwendet wird, wobei die Ausrichtung anhand eines im mobilen Gerät integrierten elektronischen Kompasses ermittelt wird.

6. Verfahren nach einem der Ansprüche 1 bis 5, wobei das Piktogramm (P1,...,Pn) des Softwarebausteins (APP1,..,APPn) mit einer Bedien-/Beobachtungsfunktionalität, welches das Ranghöchste ist, den zugehörigen Softwarebaustein (APP1,...,APPn) automatisiert startet.

7. Computerprogrammprodukt umfassend Programmteile und Instruktionen, welche, wenn geladen in einem mobilen Endgerät (1), zur Durchführung eines Verfahrens nach einem der Ansprüche 1 bis 6 ausgelegt sind.
